Europäisches Patentamt

European Patent Office

Office européen des brevets

(11) Veröffentlichungsnummer: **0 101 801**

**A1**

(12) **EUROPÄISCHE PATENTANMELDUNG**

(21) Anmeldenummer: 83105609.8

(22) Anmeldetag: 08.06.83

(51) Int. Cl.³: **H 02 P 6/02**

(30) Priorität: 24.07.82 DE 3227706

(43) Veröffentlichungstag der Anmeldung:
07.03.84 Patentblatt 84/10

(84) Benannte Vertragsstaaten:
CH FR GB IT LI SE

(71) Anmelder: TELDIX GmbH
Grenzhöfer Weg 36 Postfach 105608
D-6900 Heidelberg 1(DE)

(72) Erfinder: Eiffert, Karl Ludwig, Dipl.-Ing.
Hydnstrasse 53
D-6905 Schriesheim(DE)

(72) Erfinder: Janczak, Christian, Dipl.-Ing.
Zentgrafenstrasse 40
D-6905 Schriesheim(DE)

(72) Erfinder: Bufe, Hans-Peter
Adelsheimer Strasse 20
D-6800 Mannheim-Wallstadt(DE)

(74) Vertreter: Kammer, Arno, Dipl.-Ing.
TELDIX GmbH Postfach 10 56 08 Grenzhöfer Weg 36
D-6900 Heidelberg 1(DE)

(54) Gleichstrommotor.

(57) Es wird ein Gleichstrommotor mit mehrphasiger Ständerwicklung vorgeschlagen. Eine Kommutierungseinrichtung erzeugt Signale, die über eine Auswahlschaltung die Kommutierung des Motorstroms für beide Drehrichtungen steuert.

Um ein hohes Bremsmoment beim Umschalten der Drehrichtung und ein hohes Beschleunigungsmoment zu erzielen ist vorgesehen, mit der Auswahlschaltung die Ist-Drehrichtung und die Soll-Drehrichtung zu erkennen. Daraus wird eine der vier Kommutierungsverknüpfungen, die in einem Festwertspeicher enthalten sind, für die nachstehenden Phasen des Motors, wie

Umschalten der Drehrichtung von Linkslauf auf Rechtslauf,

Umschalten der Drehrichtung von Rechtslauf auf Linkslauf,

Beschleunigen im Rechtslauf und Beschleunigen im Linkslauf

ausgewählt. Durch diese Auswahl ist ein maximales Brems- bzw. Beschleunigungsmoment erreichbar.

FIG.1

T E L D I X   G m b H

Postfach 10 56 08

Grenzhöfer Weg 36

6900 Heidelberg 1

Heidelberg, den 6. Juni 1983

PT-Vo/Ba          E-525 EPÜ

### Gleichstrommotor

Die Erfindung betrifft einen Gleichstrommotor mit mehrphasiger Ständerwicklung und durch Winkelstellungsgeber gesteuerter elektronischer Kommutierungseinrichtung, bei dem die Signale des Winkelstellungsgebers über eine Auswahlschaltung die Kommutierung des Motorstromes für beide Drehrichtungen steuert.

Ein solcher Motor ist aus der DE-OS 27 42 661 bekannt. Die Winkelstellungsgeber sind Hallgeneratoren, deren Hallelektroden jeweils an einem Operationsverstärker angeschlossen sind. Die Ausgänge der Operationsverstärker sind auf EX-OR-Schaltglieder geschaltet, deren jeweils zweiter Eingang mit dem Ausgng eines weiteren EX-OR-Schaltgliedes verbunden ist. Dieses Schaltglied weist zwei Eingänge auf. Ein Eingang steuert die Funktionen 'Treiben-Bremsen' und der weitere Eingang die Funktionen 'Rechtslauf-Linkslauf'. Über den EX-OR-Schaltgliedern nachgeschaltete NOR-Schaltglieder und einer Verknüpfungslogik werden die den Ansteuerstrom steuernde Transistoren geschaltet. Die Funktionen 'Drehrichtung' und 'Bremsen' bzw. 'Treiben' können nicht unabhängig voneinander gesteuert werden; beispielsweise erzeugt ein Signal 'Bremsen'

**TELDIX**
HEIDELBERG

bei Linkslauf als Ausgangsbefehl "Rechtslauf", d.h., das
Signal 'Bremsen' erzeugt lediglich eine Drehrichtungsumkehr.

Die Winkelstellungsgeber weisen zu den Spulen des Motors
eine bestimmte Stellung auf, die durch den optimalen Schalt-
zeitpunkt festgelegt ist. Diese Festlegung ist jedoch nur
bei einer bestimmten Drehrichtung optimal, in der anderen
Drehrichtung müssen Verluste durch Schaltzeitpunktverschiebungen in Kauf genommen werden. Ein Motor, der in beide Drehrichtungen genutzt werden soll, würde zumindest in einer
Drehrichtung einen ungünstigen Wirkungsgrad aufweisen oder
als Kompromißlösung, d.h., bei mittlerer Einstellung der Sensoren in beiden Drehrichtungen nicht ein optimales, aber für
manche Anwendungen noch brauchbares Laufverhalten aufweisen.

Aufgabe der Erfindung ist es daher, einen Gleichstrommotor
mit Ansteuerschaltung zu schaffen, der in jeder Drehrichtung,
als auch bei Drehrichtungsumkehr, also beim Bremsen und
Beschleunigen, einen optimalen Wirkungsgrad aufweist.

Diese Aufgabe wird dadurch gelöst, daß der Auswahlschaltung
ein Drehrichtungs-Ist-Signal und ein Drehrichtungs-Soll-Signal zugeführt wird und eine Auswertelogik aus diesen und
dem Signal des Winkelstellungsgebers Schaltsignale bildet,
und ein Festwertspeicher (PROM) der Auswahlschaltung nachgeschaltet ist, der aufgrund der Schaltsignale und dem Signal des Winkelstellungsgebers bei beliebigen Betriebsarten
die optimalen Schaltzeitpunkte des Ansteuerstroms steuert.

Es ist mit dieser Auswahlschaltung möglich, sowohl ein Abbremsen auf die Drehzahl "Null" aus beiden Drehrichtungen,
als auch ein direktes Umschalten von einer Drehrichtung auf
die entgegengesetzte Drehrichtung durchzuführen. Die genannten Möglichkeiten werden durch die entsprechende Auswahl der
Schaltzeitpunkte der Schaltströme mit den geringsten Ver-

0101801

E-525 EPÜ

lusten, d.h., mit hohen Verzögerungs- bzw. Beschleunigungswerten, durchgeführt. Es ist damit ein Motor geschaffen, der
geeignet ist, in Regelkreisen mit kurzen Regelintervallen
als Stellglied eingesetzt zu werden.

Vorteilhafte Weiterbildungen der Erfindung sind in den Unteransprüchen angeführt.

Nachfolgend wird anhand eines Ausführungsbeispieles die Erfindung näher erläutert.
Es zeigen:

Fig. 1    ein Schaltbild der Auswahlschaltung,
Fig. 2    ein Impulsdiagramm,
Fig. 3    ein Schaltbild der Motor-Ansteuerschaltung,
Fig. 4    ein Motorstrom-Diagramm bei nichtoptimalem Bremsvorgang,
Fig. 5    ein Motorstrom-Diagramm bei optimalem
          Bremsvorgang.

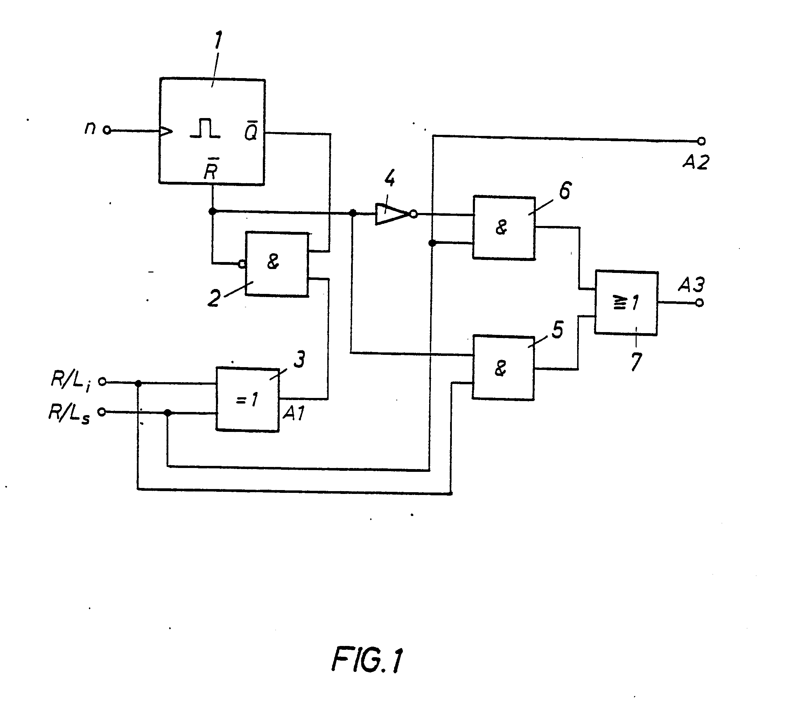

Das Schaltbild in Fig. 1 zeigt ein Monoflop 1, dem an dem
aufflankentriggerbaren Eingang Signale n eines einfachen
digitalen Drehzahlsensors zugeführt werden. Der Ausgang Q
des Monoflops ist mit einem NAND-Schaltglied 2 verbunden
dem auch Signale eines EX-OR-Schaltglieds 3 zugeführt werden. Der Ausgang des NAND-Schaltglieds 2 ist dem Eingang R
des Monoflops, einem Inverter 4 und dem AND-Schaltglied 5
eines AND-OR-Selects zugeordnet. Das EX-OR-Schaltglied 3 wird
durch ein Drehrichtungs-Ist-Signal $R/L_i$ und ein Drehrich-
tungs-Soll-Signal $R/L_s$ angesteuert, wobei diese Eingangssignale auch an den beiden AND-Gliedern 5, 6 des AND-OR-
Selects anliegen. Die Ausgangssignale der AND-Glieder 5, 6
werden dem OR-Glied 7 zur Bildung eines Ausgangssignals A3
zugeführt.

TELDIX
HEIDELBERG

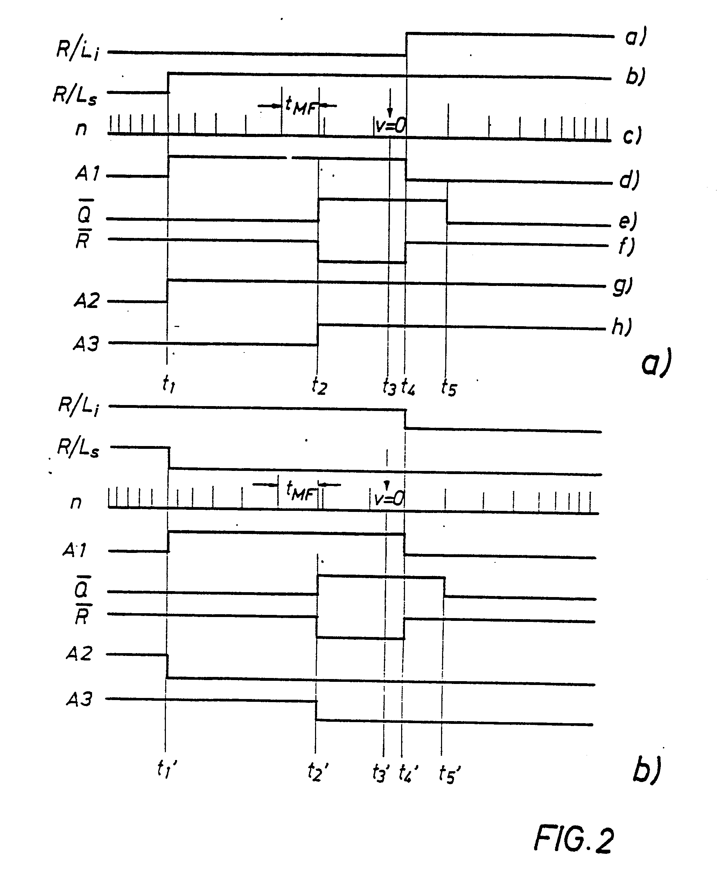

Anhand der Fig. 2 wird die Wirkungsweise der Schaltung näher erläutert. Im Diagramm c) der Fig. 2 sind von dem Drehzahlsensor erzeugte Impulse oder Aufflanken dargestellt, deren Aufeinanderfolge in Zeitabständen erfolgt, die kürzer als die eingestellte Monoflopzeit $t_{MF}$ sind. Damit bleibt das Ausgangssignal Q des Monoflops auf "low". Soll der Motor seine Drehrichtung ändern, dann ist es erforderlich, das Eingangssignal $R/L_S$, d.h., das Drehrichtungs-Soll-Signal in eine von dem Drehrichtungs-Ist-Signal $R/L_i$ abweichende Schaltstellung zu bringen; das Ausgangssignal des EX-OR-Schaltgliedes 3 erzeugt ein "high"-Signal, außerdem bewirkt die Änderung des mit dem Eingang $R/L_S$ verbundenen Ausgangs $A_2$ ein Abbremsen des Motors in einer weiter unten näher erläuterten Weise. Sobald sich der Motor so weit verlangsamt hat, daß die Zeit zwischen zwei Impulsen des Drehzahlsensors größer als die Monoflopzeit $t_{MF}$ ist (Diagramm c), d.h., der Motor hat nahezu die Drehzahl "null" erreicht, schaltet der Ausgang Q auf "high" (Diagramm e) und damit den Ausgang des NAND-Gliedes 2 auf "low" (Diagramm f). Dies bewirkt ein Sperren des Monoflops und ein Schalten des UND-Gliedes 6 auf "high". Damit erhält der Ausgang $A_3$ (Diagramm h) ebenfalls ein "high" Signal, welches besagt, daß nahezu Stillstand erreicht ist ($t_2$) und die Drehrichtungsumkehr bevorsteht. Zum Zeitpunkt $t_3$ ist die Drehzahl des Motors "null". Zum Zeitpunkt $t_4$ schaltet der Eingang $R/L_i$ des Schaltgliedes 3 von "0" auf "1". Das NAND-Glied 2 erzeugt daraufhin ein Ausgangssignal "high", welches das Sperren des Monoflops 1 aufhebt. Der nächstfolgende Impuls des Drehzahlsensors nach der Drehrichtungsumkehr setzt zum Zeitpunkt $t_5$ das Monoflop 1, d.h., das Ausgangssignal Q ist "0".

Bei dem oben dargestellten Ablauf wurde der Motor in seiner Drehrichtung von Linkslauf auf Rechtslauf umgeschaltet. Die Umschaltung von Rechtslauf nach Linkslauf erfolgt in gleicher Weise und ist in Fig. 2b dargestellt. Die Ausgangssignale $A_2$, $A_3$ sind zu Beginn der Umschaltphase auf "high".

TELDIX
HEIDELBERG

Bei Beginn der Bremsphase schaltet das mit dem Eingangssignal R/L$_S$ verbundene Ausgangssignal A$_2$ auf "low". Bei einer Drehzahl nahe "Null", d.h., wenn die Bremsphase beendet werden soll schaltet zur Einleitung der Beschleunigungsphase das Ausgangssignal A$_3$ ebenfalls auf "low". Sollte durch ein zu schnelles Abbremsen und nachfolgendem Beschleunigen die Zeit zwischen den einzelnen Impulsen des Drehzahlsensors zu kurz sein um ein Schalten des Monoflops zu bewirken, dann wird aufgrund des Signals R/L$_i$ angezeigt, daß der Motor die Drehrichtung umgekehrt hat; daraufhin wird die Beschleunigungsphase eingeleitet. Das Monoflop vermeidet vor allem bei geringeren Geschwindigkeitsänderungen ein undefiniertes Verhalten des Motors im Zeitpunkt der Richtungsumkehr.

Die Ausgangssignale A$_2$, A$_3$ der Schaltung werden einem Festwertspeicher (PROM) zugeführt. Es können insgesamt 4 Speicheradressbereiche abgerufen werden. Diese Speicher enthalten die jeweils optimale Zuordnung der Ansteuerung der Motorspulen zu den entsprechenden Sensorsignalen, d.h., die Zuordnungen bei Umschalten von Rechtslauf auf Linkslauf, von Linkslauf auf Rechtslauf, Beschleunigung Linkslauf und Beschleunigung Rechtslauf. Die Zuordnung beim Beschleunigungsvorgang bleibt auch bei Erreichen der Solldrehzahl bestehen. Am Beispiel des Umschaltens bei Rechtslauf auf Linkslauf soll die Zuordnung der Motorströme zur Kommutierung durch die Sensorsignale dargestellt werden.

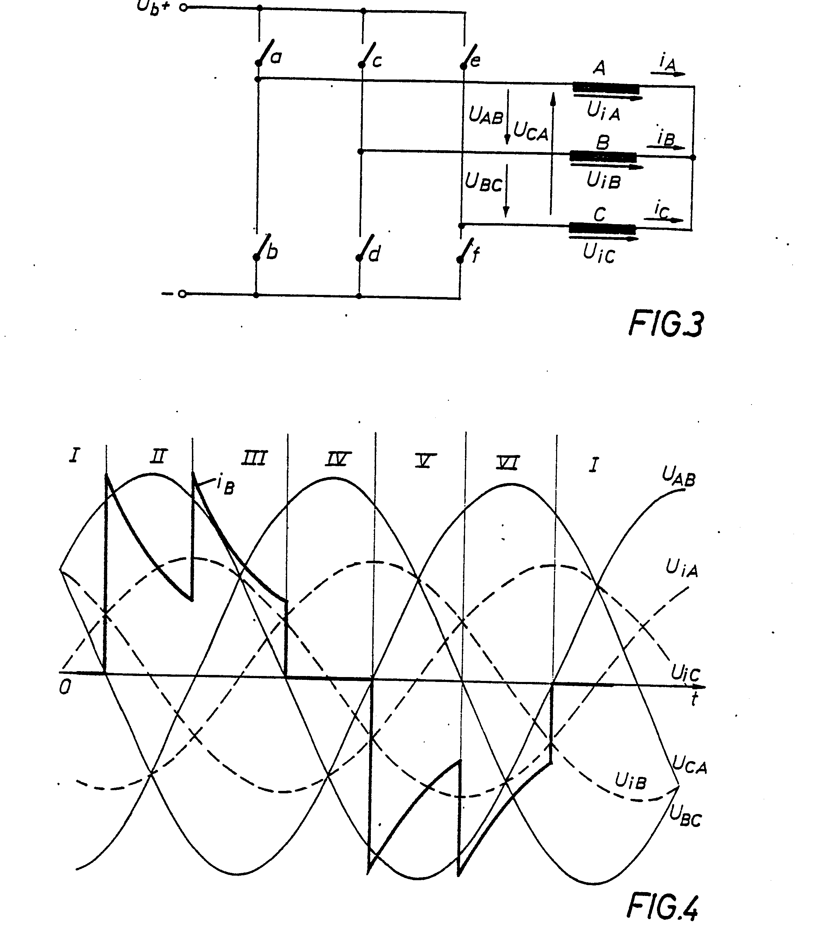

In Fig. 3 sind als Schalter a-f die Schalttransistoren für die Spulen A-C des Motors dargestellt. Die einzelnen Spulen induzieren, wie in Fig. 4 dargestellt, bei Drehung des Rotors die Spannungen U$_{iA}$, U$_{iB}$, U$_{iC}$, die nach Summation die ebenfalls in Fig. 4 dargestellten Spannungen U$_{AB}$, U$_{BC}$ und U$_{CA}$ bilden. Die Schalter a-f behalten jeweils innerhalb einer der Perio-

0101801

E-525 EPÜ

den I-VI ihre Schaltstellung bei. Die zu der entsprechenden Periode gehörende Schaltstellung ist durch den Festwertspeicher vorprogrammiert. Der in Fig. 4 dargestellte Stromverlauf $i_b$ würde beim Umschalten des Motors bei Rechtslauf auf Linkslauf erzielt, wenn die Schaltstellung der für Linkslauf entspricht. Die beim noch stattfindenden Rechtslauf induzierten Spannungen haben einen Stromverlauf zur Folge, der kein ideales Abbremsen ermöglicht. Der Strom erreicht zwar zu Beginn der Perioden einen hohen Anfangswert, fällt aber durch die im Rechtslauf erzeugte EMK stark ab.

Zur besseren Übersichtlichkeit der Darstellung wurde in Fig. 4 lediglich der Strom $i_B$ aufgetragen. Natürlich verhalten sich die Ströme $i_A$ und $i_C$ in gleicher Weise. Zu Beginn der Periode II wird Schalter c und Schalter f geschlossen, so daß der Strom $i_B$ auch über Spule C geführt wird, d.h., einen negativen Strom $i_C$ darstellt. In Phase III ist Schalter b und c geschlossen, der Strom $i_A$ entspricht dem Strom $i_B$ mit umgekehrtem Vorzeichen. Während der Periode IV fließt kein Strom durch Spule B, anschließend in Periode V jedoch in negativer Richtung über Schalter d und e. In Periode VI wird der Strom über die Schalter a und d gesteuert, während in Periode I wiederum kein Strom in Spule B fließt.

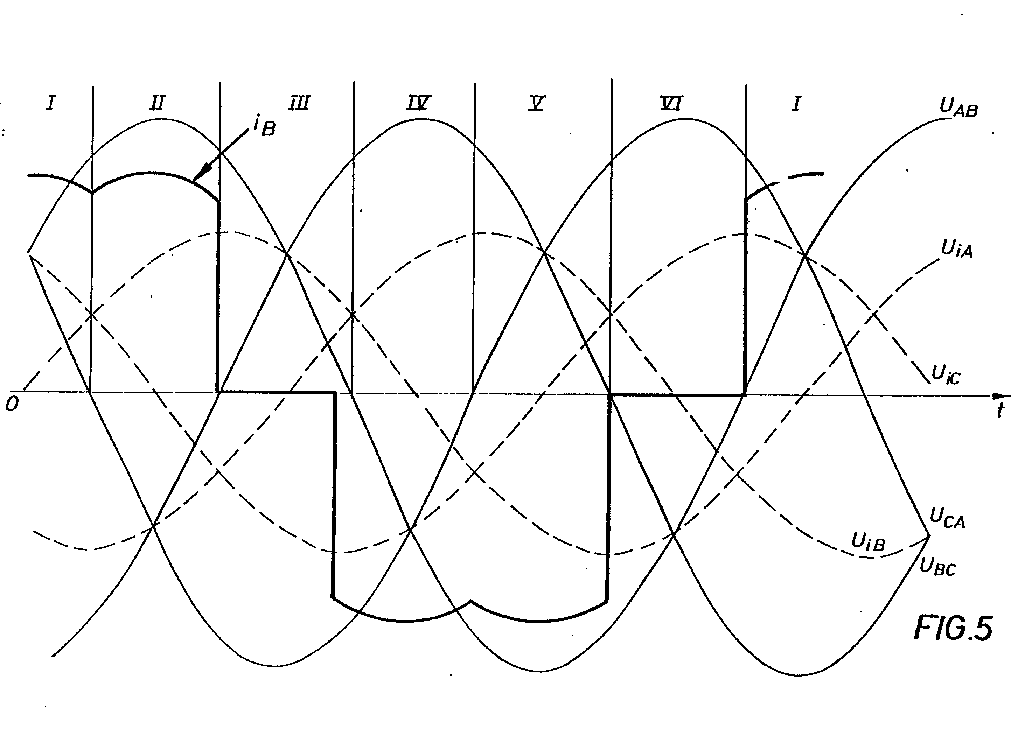

Zur Verbesserung des Bremsvorganges, d.h., um die Verzögerungszeit zu verkürzen, wird die gezeigte logische Verknüpfung der Schalter erst nach dem Stillstand des Motors zum nachfolgenden Beschleunigen in den Linkslauf angewendet. Hierbei kann durch die beim Linkslauf erzeugte EMK ein im wesentlichen konstanter Strom eingespeist werden. Während der Abbremsphase aus dem Rechtslauf bis zur Drehzahl 0 ist eine Schaltlogik vorgesehen, die einen Strom $i_B$ erzeugt, der den in Fig. 5 dargestellten Verlauf aufweist. Nachdem während der Periode II die Schalter b und c geschlossen waren, fließt in Periode III kein Strom $i_B$. In Periode IV sind die Schal-

**TELDIX**
HEIDELBERG

**0101801**

ter d und e und in Periode V a und d geschlossen. Durch
Öffnen des Schalters d fließt in Periode VI kein Strom $i_B$,
während in Periode I der Strom durch die Schalter c und f
gesteuert wird. In dieser Weise wird ein maximales Bremsmoment während der Verzögerungsphase erzeugt. Entsprechend
der in Fig. 5 gezeigten Zuordnung der Schalterstellungen
zu der jeweiligen Periode wird in allen vier Betriebsarten
des Motors verfahren.

**TELDIX**
HEIDELBERG

Patentansprüche

1. Gleichstrommotor mit mehrphasiger Ständerwicklung und durch Winkelstellungsgeber gesteuerter elektronischer Kommutierungseinrichtung, bei dem die Signale des Winkelstellungsgebers über eine Auswahlschaltung die Kommutierung des Motorstromes für beide Drehrichtungen steuert, dadurch gekennzeichnet, daß der Auswahlschaltung ein Drehrichtungs-Ist-Signal (R/L$_i$) und ein Drehrichtungs-Soll-Signal (R/L$_s$) zugeführt wird und eine Auswertelogik aus diesen und dem Signal des Winkelstellungsgebers Schaltsignale bildet und ein Festwertspeicher (PROM) der Auswerteschaltung nachgeschaltet ist, der aufgrund der Schaltsignale und dem Signal des Winkelstellungsgebers bei beliebigen Betriebsarten die optimalen Schaltzeitpunkte des Motorstroms steuert.

2. Gleichstrommotor nach Anspruch 1, dadurch gekennzeichnet, daß die der Auswahlschaltung zugeführten Drehrichtungssignale einem EX-OR-Schaltglied (3) und jeweils einem AND-Schaltglied (5,6) aufgeschaltet werden und daß ein Monoflop-Schaltglied (1) vorgesehen ist, dessen aufflankentriggerbarer Eingang (n) Signale des Winkelstellungsgebers, welcher insbesondere als digitaler Drehzahlsensor ausgebildet ist, erhält und dessen Ausgang Q und der Ausgang des EX-OR-Schaltgliedes (3) einem NAND-Glied (2) aufgeschaltet ist und dessen Ausgang mit dem Reset-Eingang R des Monoflop-Schaltgliedes (1) und mit den weiteren Eingängen der AND-Schaltglieder (5,6) verbunden ist, wobei ein Eingang des NAND-Schaltgliedes (6) ein invertiertes Signal erhält und ein OR-Schaltglied (7) vorgesehen ist, dem die Ausgangssignale der AND-Schaltglieder (5,6) aufgeschaltet sind und ein Ausgangssignal erzeugt, welches bei dem optimalen Schalt-Zeitpunkt zum Beendigen des Bremsvorgangs umschaltet.

0101801

3. Gleichstrommotor nach Anspruch 1 oder 2, dadurch gekennzeichnet, daß das Drehrichtungs-Soll-Signal (R/L$_s$) direkt auf den Festwertspeicher aufgeschaltet ist.

4. Gleichstrommotor nach einem der vorherigen Ansprüche, dadurch gekennzeichnet, daß der Festwertspeicher vier Speicherbereiche aufweist, in denen jeweils die optimalen Einschaltzeitpunkte des Motorstromes für Rechtslauf, Linkslauf, Umschaltung auf Rechtslauf bei Linkslauf und Umschaltung auf Linkslauf bei Rechtslauf abgespeichert sind und durch die Signale des Winkelstellungsgebers und die Signale der Auswahlschaltung abgerufen werden.

TELDIX
HEIDELBERG

FIG.1

0101801

−2/4−

a)

b)

FIG.2

E−525 EPÜ

TELDIX
HEIDELBERG

0.101801

FIG.3

FIG.4

E-525 EPÜ

**TELDIX**
**HEIDELBERG**

FIG.5

I    II    III    IV    V    VI    I

$i_B$

$U_{AB}$

$U_{iA}$

$U_{iC}$

$U_{CA}$

$U_{iB}$

$U_{BC}$

0

t

E-525 EPÜ

TELDIX
HEIDELBERG

0101801

# EUROPÄISCHER RECHERCHENBERICHT

Europäisches
Patentamt

Nummer der Anmeldung

EP  83 10 5609

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-4 270 074  (J.J. DUCKWORTH et al.)<br>* Ansprüche 1, 2; Figur 2 * | 1 | H 02 P    6/02 |
| P,A | GB-A-2 092 780  (PRIAM CORP.)<br><br>* Figuren 1, 2 * | | |
| A | ELEKTRONIK, Band 29, Nr. 10, 1980, München M. BRENDLE "Kombinatorische und sequentielle Logikschaltungen mit PROMs", Seiten 67-70<br>* Seite 69 * | | |

RECHERCHIERTE
SACHGEBIETE (Int. Cl. ³)

H 02 K   29/02
H 02 P    5/00
H 02 P    6/02
H 02 P    7/00
H 02 P    8/00

Der vorliegende Recherchenbericht wurde für alle Patentansprüche erstellt.

| Recherchenort | Abschlußdatum der Recherche | Prüfer |
|---|---|---|
| BERLIN | 25-10-1983 | FAORO G |